# EUROPÄISCHE PATENTSCHRIFT

(11) **EP 0 610 419 B1**
(45) Veröffentlichungstag und Bekanntmachung des Hinweises auf die Patenterteilung: **24.05.1995**
(21) Anmeldenummer: 92924047.1
(22) Anmeldetag: 02.11.1992
(51) Int. Cl.: B01D 57/02, C07B 57/00

(54) **VERFAHREN ZUR TRENNUNG VON ENANTIOMEREN**
PROCESS FOR SEPARATING ENANTIOMERS
PROCEDE DE SEPARATION D'ENANTIOMERES

(30) Priorität: 01.11.1991 DE 4136462
(43) Veröffentlichungstag der Anmeldung: 17.08.1994
(73) Patentinhaber: CHROMPACK INTERNATIONAL B.V., NL-4338 PL Middelburg (NL)
(72) Erfinder: SCHURIG, Volker, D-7400 Tübingen (DE); MAYER, Sabine, D-7400 Tübingen (DE); MUSSCHE, Philippe, NL-4337 LE Middelburg (NL)
(74) Vertreter: de Bruijn, Leendert C.
(86) Internationale Anmeldenummer: NL9200195
(87) Internationale Veröffentlichungsnummer: WO9308903

(56) Entgegenhaltungen:
- EP-A- 0 376 883
- US-A- 4 948 395
- JOURNAL CHROMATOGRAPHY, Band 448, 1988, A. Guttman et al, "Use of complexingagents for selective separation in high-performance capillary electrophoresis"
- JOURNAL OF CHROMATOGRAPHY, Band 474, 1989, S Fanali, "Separation of optical isomers by capillary zone electrophoresis based on host-guest complexation with cyclodextrins"
- JOURNAL OF CHROMATOGRAPHY, Band 472, 1989, Jiri Snopek et al, "Use ofcyclodextrins in isotachophoresis"

## Beschreibung

Die Erfindung betrifft ein Verfahren zur Trennung von Enantiomeren durch Elektromigration in Kapillarsäulen.

Gegenüber chromatographischen Methoden weisen Elektromigrationsverfahren in Kapillaren (Kapillarzonenelektrophorese, Kapillarisotachophorese, Micellare elektrokinetische Chromatographie MEKC etc.) wichtige Vorteile auf wie höchste Effizienz, frontale Elutionsprofile, Miniaturisierung und einfache Apparaturen.

Novotny bezeichnete kürzlich die Technik der Kapillarelektrophorese (CE) als "the ultimate in bioanalytical separation" und wies auf deren Bedeutung für die Trennung optischer Isomere (Enantiomere) hin (vgl. LC-GC Intl., Vol. 4 (No. 9), S.48 (1991).

Ein entschiedener Vorteil der Elektromigrationsverfahren besteht darin, daß die Auftrennung von Analyten nach dem elektrophoretischen Trennprinzip durch Verwendung von micellenbildenden oberflächenaktiven Substanzen oder inklusionsfähigen Agenzien (Cyclodextrine) aufgrund zusätzlicher chromatographischer Verteilungsgleichgewichte noch verbessert werden kann ("zweidimensionale Elektrochromatographie"). Enantiomerentrennungen in der Kapilarelektrophorese wurden bisher überwiegend durch Zusatz eines chiralen Selektors (z.B. Kupfer-L-Histidin-Komplexe, Cyclodextrine) zur mobilen Pufferlösung durchgeführt (E. Gassmann, J. Kuo, R.J. Zare, Science, 230 (1985) 813; H. Nishi, T. Fukujama, M. Matsuo, S. Terabe, J. Microcol. Sep. 1 (1989) 234; S. Terabe et al., J. Chromatogr. 332 (1985) 211 und 553 (1991) 503; J. Snopek, E. Smolkova-Keulemansova, J. Chromatogr. 438 (1988) 211; S. Fanali, ibid., 545 (1991) 437). Der Einbau von Cyclodextrinen in Gele in der Kapillargelektrophorese führte zu Trennungen von racemischen Aminosäuren (A. Guttman, A. Paulus, A. Cohen, N. Grinberg, B. Karger, J. Chromatogr., 448 (1988)41).

Gefunden wurde jetzt, daß eine wesentliche Verbesserung dieser Verfahren zur Enantiomerentrennung erreicht werden kann, wenn der chirale Selektor nicht der mobilen Phase zugesetzt wird, sondern an das Trägermaterial oder an die Glasoberfläche chemisch angebunden und permanent immobilisiert wird.

Das erfindungsgemässe Verfahren wird dadurch gekennzeichnet, daß chirale Stationärphasen verwendet werden, die als Füllung aufgebracht und an die im Trennsystem findlichen Oberflächen immobilisiert worden sind. Beim anmeldungsgemässen Verfahren ist die de-novo-Bereitstellung der Trennkomponenten nach jedem Analysengang nicht mehr erforderlich.

Die Erfindung betrifft demnach ein Verfahren zur selektiven Auftrennung von Enantiomeren durch Trenntechniken, die auf dem Prinzip der Elektromigration in nicht Gel-gefüllten Kapillarsäulen beruhen, mithilfe von chiralen, oberflächen-gebundenen und immobilisierten enantioselectiven Stationärphasen, z.B. CHIRASIL-DEX (ein Polysiloxan, an das Cyclodextrin chemisch angebunden ist). Beispiele von chiralen Stationärphasen sind die nachfolgenden:
Proteine, Proteide
Nukleinsäuren
Antikörper
chirale Aminosäurederivate, chirale Hydroxycarbonsäurederivate,
Cyclodextrine und Derivate
chirale Alkoholderivate und Diolderivate
chirale Aminderivate
chirale Heteroatom-enthaltene Selektoren
chirale synthetische Polymere
chirale Polysiloxane
Cellulosederivate
Amylosederivate
Kohlenhydrate
Bei dem vorliegenden Verfahren werden die zu trennenden Enantiomere durch Anlegen eines elektrischen Feldes durch die Trennkapillare bewegt. Die mit dieser Messanordnung erreichte Effizienz überragt bei weitem diejenige bekannter Trenntechniken (z.B. High Pressure Liquid Chromatography, HPLC). Sind die Wanderungsgeschwindigkeiten der Einzelsubstanzen in achiraler Umgebung gleich, wie beispielsweise bei optischen Isomeren, so wird eine Enantiomerendiskriminierung durch Zugabe eines chiralen, nicht racemischen Selektors aufgrund der Ausbildung eines schnellen und reversiblen enantioselektiven Verteilungsgleichgewichts erreicht. Bei Verwendung von Cyclodextrinen beruht die Enantiomerendiskriminierung wahrscheinlich auf Inklusion der Analyte in den chiralen Hohlraum des Cyclodextrintorus (vgl. V.Schurig, H.P. Nowotny, Angew. Chem., 102 (1990)969). Die chirale Trennung beruht auf pi-pi Wechselwirkung, Wurtz-Gast(Ghost-Gast)-Wechselwirkung, Inklusions-Wechselwirkung, Dipol-Dipol-Wechsel-wirkung, Komplexierung-Wechselwirkung, Koordinations-Wechselwirkung oder Ligandaustausch.
Bei den bisher in der Literatur beschriebenen Methoden zur Enantiomerenanalyse erfolgte der Zusatz von nativen oder derivatisierten Cyclodextrinen hauptsächlich durch Zumischen zur Pufferlösung. Trotz der Einfachheit und großen Anwendungsbreite dieser Methode ist diese jedoch mit grundlegenden Nachteilen behaftet, die die routinemässige Anwendung zur Enantiomeranalytik erschweren. Eine Rezyklizierung des nach jedem Analysenlauf zu erneuernden Elektrolyten in der Trennkapillare ist oft sehr zeitaufwendig, wobei der zusätzliche Verlust an derivatisiertem Cyclodextrin (γ) einen nicht unerheblichen Kostenfaktor darstellt. Eine wesentliche Verbesserung der elektrochromatographischen Enantiomerenanalytik stellt erfindungsgemäss die permanente Fixierung nativer und derivatisierter Cyclodextrine an eine im Trennsystem befindliche Oberfläche dar, an der nunmehr erstmals Enantiomerentrennungen durch Elektrochromatographie gelungen sind. Die chiral modifizierte Oberfläche ist im einfachsten Fall die Säuleninnenwand, kann aber auch ein in die Säule gebrachtes Packungsmaterial (z.B. die in der HPLC üblichen Trägermaterialien) darstellen. Die Aufbringung des Cyclodextrins auf die Oberfläche erfolgt bevorzugt durch direkte chemische Anbindung. Erfindungsgemäss muß die Anbindung in nicht-Gel-gefüllten Kapillarsäulen jedoch nicht ausschließlich durch vorherige chemische Bindung an ein unlösliches oder immobilisierbares Polymer erfolgen, denn auch im Puffer unlösliche Cyclodextrinderivate bieten durch Benutzung der Oberfläche die Möglichkeit zur enantioselektiven Wechselwirkung. Die sich aus der erfindungsgemässen Durchführung der Methode zur Enantiomerenanalytik in der Kapillarelektrophorese ergebene Fülle von Wegen zur Oberflächenfixierung von Cyclodextrinen (oder anderen chirale Selektoren), führt bevorzugt zum Einsatz von cyclodextrinhaltigen Polymeren auf Polysiloxanbasis wie zum Beispiel CHIRASIL-DEX (oder anderen chiralen polymeren) (V.Schurig, D. Schmalzing, M. Schleimer, Angew. Chem. 103 (1991) 994). Aufgrund der oft hohen Enantioselektivität verbunden mit den Vorteilen von Polysiloxanen, wie einfaches Belegen von Oberflächen, leichte Immobilisierbarkeit und hohe chemische Stabilität hat sich die chirale Stationärphase CHIRASIL-DEX auch schon in anderen Verfahren (Inklusions-Gaschromatographie und Superkritische-Fluid-Chromatographie) bewährt (V. Schurig et al., J. High Resolut. Chromatogr. 13 (1990) 713 und 14 (1991) 58). Die Immobilisierung kann zum Beispiel thermisch durch Erhitzen auf zum Beispiel 115 bis 215°C, radikalisch mittels Peroxyde oder solche Reagentien oder durch Bestrahlung mit Gammastrahlen durchgeführt werden. Die folgenden Beispiele sollen das erfindungsgemässe Verfahren erläutern, ohne dieses jedoch einzuschränken.

### Beispiele:

### Beispiel 1:

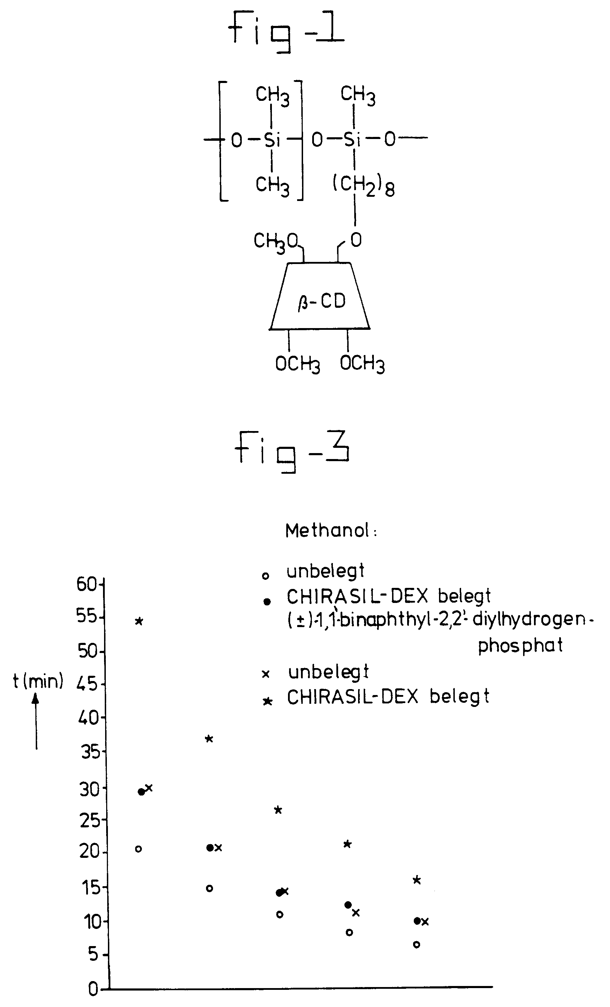

Die Anbindung der Cyclodextrinderivate an das Polysiloxan erfolgt durch Hydrosilierung (V. Schurig et al., J. High Resolut. Chromatogr. 13 (1990) 713 und 14 (1991)58). Vor der Belegung einer Fused Silica Kapillarsäule (z.B. 50 »m Innendurchmesser, 1 m Länge) werden ungefähr 3 mm der Polymidschicht für die On-column-Detektion beispielweise durch Abbrennen beseitigt. Die Belegung erfolgt nach der statischen Methode. CHIRASIL-DEX [α, β oder γ-6-permethylen (2,3,6-permethylcyclodextrin) peralkyl(aryl)polysiloxan] (Abb. 1) wird dazu in einem leichtflüchtigen Lösungsmittel (z.B. n-Pentan) gelöst. Die Immobilisierung der chiralen Phase erfolgt bevorzugt thermisch bei 250°C. Durch gaschromatographische Messungen mit einschlägigen racemischen Testsubstraten werden Immobilisierungsgrad, Selektivität und Effizienz der Säule vorab getestet. Danach wird die Kapillarsäule in ein Elektrophoresegerät (z.B. Kapillar-Elektrophorese-System 100 der Firma GROM, Herrenberg, FRG), ausgestattet mit einer Hochspannungsquelle, einem On-column-UV-Detektor, zwei Puffergefässen, jeweils eines an der Injektions- und Detektionsseite der Kapillarsäule, eingebaut. Auf vorsichtige Justierung des Detektionsfensters wird geachtet. Die Kapillarsäule wird mit Pufferlösung (z.B. Borat-Phosphat-Puffer pH7) langsam gespült, danach wird eine Spannung z.B. von 15 kV angelegt.
Dieser Vorgang wird so lange wiederholt bis bei sehr empfindlicher Einstellung des Detektors und des Integrators (z.B. Schimadzu C-R3A Chromatograp) eine stabile Basislinie zu beobachten ist. Die erreichte Anordnung wird nun zur Enantiomerentrennung racemischer Analyte eingesetzt (Beispiel 2 und 3). Nach jedem Analysenlauf wird die Kapillarsäule mehrmals mit Puffer und gegebenfalls mit Wasser oder Methanol gespült. Die Säule zeigte nach zweiwöchigem Dauerbetrieb keine Verminderung ihrer Enantioselektivität (Beispiel 2 und 3) oder eine gravierende Änderung des elektroosmotischen Flusses. Anschließende Messungen in gaschromatographischem Betrieb zeigten für dieselben Testracemate keine Veränderung bezüglich Enantioselektivität und Effizienz.
Dies läßt auf die Stabilität der CHIRASIL-DEX Phase bei elektrochromatographischen Messungen bei einem pH-Wert von 7 schließen.

### Beispiel 2:

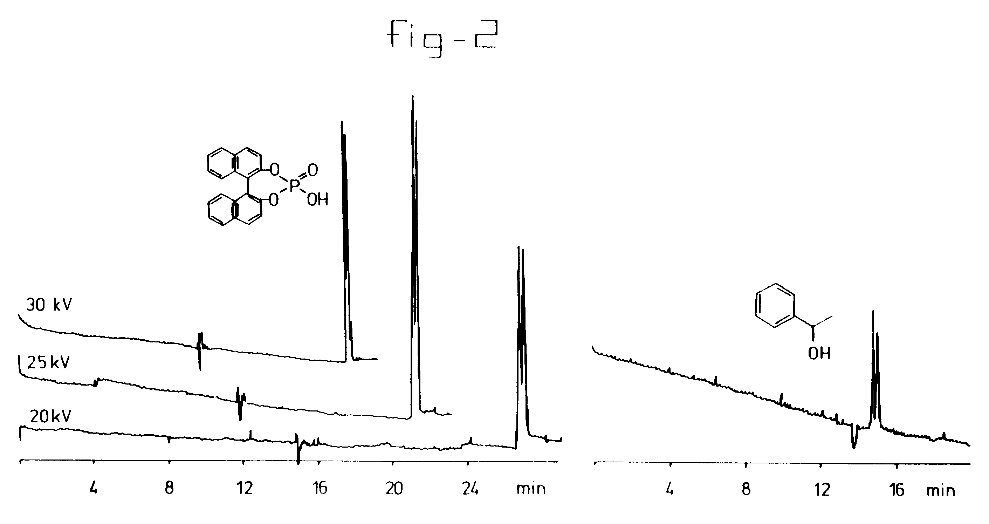

An einer nach Beispiel 1 belegten und konditionierten CHIRASIL-DEX-Kapillarsäule gelingt die Enantiomerentrennung von (±)-1,1'-Binaphthyl-2,2'-diylhydrogenphosphat bei verschiedenen Spannungen (vgl. Abb 2 (links); Säuleninnendurchmesser 50 »m, effektive Säulenlänge bis zum Detektors 80 cm, totale Länge 97 cm, Borat-Phosphat-Puffer pH 7, Detektion: 220 nm, eingestellte Spannungen 20, 25, 30 kV).

### Beispiel 3:

Unter den Bedingungen der in Beispiel 2 beschriebenen Anordnung erreicht man eine gute Auftrennung der Enantiomeren des 1-Phenylethanols schon bei kleinsten Kapazitätsfaktoren (k = 0.13) (vgl. Abb. 2 (rechts); angelegte Spannung 20 kV).

### Beispiel 4:

Für Methanol als Referenzsubstanz und für die im Beispiel 2 gezeigte Trennung zeigt Abbildung 3 den Zusammenhang zwischen Retentionszeit und angelegter Spannung einer unbelegten Kapillarsäule und einer mit immobilisierten CHIRASIL-DEX belegten Kapillarsäule. Die insgesamt erhöhten Retentionszeiten an den mit CHIRASIL-DEX belegten Kapillarsäulen beweisen neben einem erniedrigten eletroosmotischen Fluss, bedingt durch die Maskierung der Silanolgruppen durch die Belegung, das Auftreten eines zusätzlichen chemischen Verteilungsgleichgewichtes im elektrokinetischen System.

## Patentansprüche

1. Verfahren zur Trennung von Enantiomeren durch Elektromigration in Kapillarsäulen, dadurch gekennzeichnet, daß chirale Stationärphasen verwendet werden, die als Film aufgebracht und an die im Trennsystem befindlichen Oberflächen immobilisiert worden sind.

2. Verfahren nach Anspruch 1 dadurch gekennzeichnet, daß immobilisiertes [α, β oder γ-6-Permethylen (2,3,6-permethylcyclodextrin) peralkyl(aryl)polysiloxan] (CHIRASIL DEX) zur Oberflächenmodifizierung eingesetzt wird.

3. Verfahren nach Anspruch 1, dadurch gekennzeichnet, daß die Hydroxylgruppen der Cyclodextrinkomponente frei oder alkyliert (unverzweigt, verzweigt bis C₁₀₀) oder acyliert oder perfluoroacyliert (unverzeigt, verzweigt bis C₁₀₀) vorliegen und daß als chirales System α, β, γ oder δ-Cyclodextrin eingesetzt wird.

4. Verfahren nach Anspruch 2 oder 3, dadurch gekennzeichnet, daß die Anbindung der Cyclodextrinkomponente an das Polysiloxan über eine verzweigte oder unverzweigte Alkylidenkette beliebiger Länge erfolgt.

5. Verfahren nach einem der Ansprüche 2 bis 4, dadurch gekennzeichnet, daß die Polysiloxankomponente, deren organische Reste alle bisher bekannten Radikale (Alkyle, Aryle, funktionalisiert oder unfunktionalisiert) darstellen können, auf Silica-oberflächen (Glas, Fused Silica, Silicagel) immobilisiert worden sind.

6. Verfahren nach einem der vorhergehenden Ansprüchen, dadurch gekennzeichnet, daß der chirale Stationärphasenfilm entweder durch Aufbringen von [α-, β- oder γ-6-permethylen-(2,3,6-permethylcyclodextrin)peralkyl(aryl)polysiloxan] (CHIRASIL DEX) geschaffen wird oder durch On-Column-Reaktionen von cyclodextrinhaltigen reaktiven Bausteinen entsteht.

## Claims

1. Process for separating enantiomers by electro-migration in capillary columns, characterized in that chiral stationary phases are used which have been applied as a film and immobilized on the surfaces present in the separation system.

2. Process according to Claim 1, characterized in that immobilized [α, β or γ-6-permethylene (2,3,6-permethylcyclodextrin)peralkyl(aryl)polysiloxane] (CHIRASIL DEX) is employed for the surface modification.

3. Process according to Claim 1, characterized in that the hydroxyl groups of the cyclodextrin component are free or alkylated (unbranched, branched up to C₁₀₀) or acylated or perfluoroacylated (unbranched, branched up to C₁₀₀) and in that α, β, γ or δ-cyclodextrin is employed as the chiral system.

4. Process according to Claim 2 or 3, characterized in that the bonding of the cyclodextrin component to the polysiloxane is effected via a branched or unbranched alkylidene chain of arbitrary length.

5. Process according to one of Claims 2 to 4, characterized in that the polysiloxane components, whose organic radicals can be all previously known radicals (alkyls or aryls, functionalized or nonfunctionalized), have been immobilized on silica surfaces (glass, fused silica or silica gel).

6. Process according to one of the preceding claims, characterized in that the chiral stationary phase film is either created by applying [α-, β- or γ-6-permethylene(2,3,6-permethylcyclodextrin)peralkyl(aryl)polysiloxane] (CHIRASIL DEX), or arises as a result of on-column-reactions of cyclodextrin-containing reactive structural components.

## Revendications

1. Procédé de séparation d'énantiomères par un procédé d'électromigration dans des colonnes capillaires, caractérisé en ce qu'il utilise des phases chirales stationnaires qui sont appliquées en couche mince et sont immobilisées sur les surfaces internes du système de séparation.

2. Procédé, selon la revendication 1, caractérisé en ce que, pour modifier les surfaces, on utilise le composé [α, β ou γ-6-méthylène) (2,3,6-perméthylcyclodextrine) peralkyl (aryl) polysiloxane] (CHIRASIL DEX) immobilisé.

3. Procédé, selon la revendication 1, caractérisé en ce que les groupes hydroxyles des composants de la cyclodextrine sont libres ou alkylés (non-ramifiés, ramifiées jusqu'à C₁₀₀) ou acylés ou perfluoroacylés (non-ramifiés, ramifiés jusqu'à C₁₀₀) et en ce que l'on utilise, en tant que système chiral, une α, β, γ ou δ-cyclodextrine.

4. Procédé, selon la revendication 2 ou 3, caractérisé en ce que la liaison des composants de cyclodextrine au polysiloxane s'effectue par l'intermédiaire d'une chaîne d'alkylidène ramifiée ou non-ramifiée, de longueur quelconque.

5. Procédé, selon l'une quelconque des revendications 2 à 4, caractérisé en ce que les composants de polysiloxane, dont les radicaux organiques peuvent présenter tous les radicaux connus jusqu'à présent (alkyles, aryles, fonctionalisés ou non-fonctionalisés) sont immobilisés sur des surfaces de silice (verre, silice fondue, gel de silice).

6. Procédé, selon l'une quelconque des revendications précédentes, caractérisé en ce que la couche mince de la phase chirale stationnaire est formée soit par application du [α-, β- ou γ-6-perméthylène-(2,3,6-perméthylcyclodextrine) peralkyl (aryl) polysiloxane] (CHIRASIL DEX) soit par les réactions qui s'effectuent à l'intérieur de la colonne, entre des éléments réactifs contenant de la cyclodextrine.
